# EUROPÄISCHE PATENTSCHRIFT

(11) **EP 1 101 554 B1**
(45) Veröffentlichungstag und Bekanntmachung des Hinweises auf die Patenterteilung: **25.07.2001**
(21) Anmeldenummer: 99111035.4
(22) Anmeldetag: 12.06.1999
(51) Int. Cl.: B23B 31/20

(54) **Kraftbetätigtes Spannfutter für Werkzeugmaschinen**
Power chuck for machine tools
Mandrin pour machines-outils

(43) Veröffentlichungstag der Anmeldung: 23.05.2001
(73) Patentinhaber: Forkardt Deutschland GmbH, 40699 Erkrath (DE)
(72) Erfinder: Stoll, Dieter, D-73035 Göppingen (DE)
(74) Vertreter: Stenger, Watzke & Ring Patentanwälte

(56) Entgegenhaltungen:
- CH-A- 347 405
- DE-C- 679 411
- FR-A- 983 288

## Beschreibung

Die Erfindung betrifft ein kraftbetätigtes Spannfutter für Werkzeugmaschinen mit einem vorzugsweise an einer drehend antreibbaren Spindel zu befestigenden Futterkörper und einer Spannhülse, die durch zumindest über ihren vorderen Teil verlaufende radiale Schlitze in eine Mehrzahl von Spannsegmente unterteilt ist, die jeweils mit einer Spannschräge versehen und durch ein mit entsprechenden Gegenflächen versehenes, axial bewegliches Spannelement in radialer Richtung verformbar sind (siehe z.B. CH-A- 347 405).

Derartige kraftbetätigte Spannfutter mit einer in Spannsegmente unterteilten Spannhülse sind in verschiedenen Ausführungen bekannt, und zwar entweder als radial nach innen spannende Spannzange oder als radial nach außen spannender Spanndom.

Der Erfindung liegt die **Aufgabe** zugrunde, ein derartiges Spannfutter zur verformungsfreien Einspannung von dünnwandigen Werkstücken, insbesondere unbearbeiteten Spritzgußteilen zu schaffen.

Die **Lösung** dieser Aufgabenstellung durch die Erfindung ist bei einem Kraftbetätigten Spannfutter des eingangs genannten Art dadurch gekennzeichnet, daß mindestens zwei, vorzugsweise drei gleichmäßig über den Umfang verteilte Spannsegmente zentrisch spannend durch einen ausschließlich axial beweglich im Futterkörper geführten Spannkolben und die restlichen Spannsegmente ausgleichend spannend durch einen taumelnd beweglich im Futterkörper geführten Ausgleichspannkolben betätigbar sind.

Durch die Aufteilung der Spannsegmente der Spannhülse in einerseits zentrisch und andererseits ausgleichend spannende Segmente wird die Möglichkeit geschaffen, auch dünnwandige Werkstücke, wie beispielsweise unbearbeitete Spritzgußteile verformungsfrei einzuspannen, weil das Werkstück durch die zentrisch spannenden Spannsegmente zentriert und durch die ausgleichend spannenden Spannsegmente mit der für die Bearbeitung notwendigen Spannkraft im Spannfutter gehalten wird, ohne daß einzelne Spannsegmente einen so großen Spannweg ausführen bzw. eine so hohe Einzelspannkraft aufbringen, daß Verformungen der dünnwandigen Werkstücke eintreten können. Die erfindungsgemäße Aufteilung der Spannsegmente der Spannhülse in einerseits zentrisch und andererseits ausgleichend spannende Segmente erweitert somit den Einsatzbereich derartiger Spannfutter auf an den Spannstellen unbearbeitete und dünnwandige Werkstücke, denen die Gefahr einer unerwünschten Verformung beim Einspannen innewohnt.

Gemäß einem weiteren Merkmal der Erfindung sind die zentrisch spannenden Spannsegmente jeweils durch einen in einer Bohrung des Futterkörpers axial geführten Spannbolzen betätigbar, der an seinem rückwärtigen Ende starr mit dem Spannkolben verbunden und an seinem vorderen Ende mit der jeweiligen Gegenfläche für die Spannschräge des Spannsegmentes versehen ist. Hiermit wird der Vorteil erzielt, daß die zentrisch spannenden Spannsegmente der Spannhülse zwar als gemeinsame Gruppe betätigt werden, die Betätigung aber jeweils durch ein eigenes Element, nämlich einen Spannbolzen erfolgt, so daß sich ein zuverlässiges Einmitten des Werkstückes ergibt.

Erfindungsgemäß sind auch die ausgleichend spannenden Spannsegmente der Spannhülse jeweils durch einen in einer Bohrung des Futterkörpers axial geführten Spannbolzen betätigbar, der an seinem rückwärtigen Ende gelenkig mit dem taumelnd beweglich im Futterkörper geführten Ausgleichspannkolben verbunden und an seinem vorderen Ende mit der jeweiligen Gegenfläche für die Spannschräge des Spannsegmentes versehen ist Neben einer einfachen Konstruktion zur Erzielung der ausgleichenden Spannbewegung hat diese Ausgestaltung den Vorteil einer hohen Funktionssicherheit. Der Ausgleichspannkolben ist gemäß einem weiteren Merkmal der Erfindung hierbei über eine sphärische Lagerfläche um einen auf der Futterlängsachse liegenden Mittelpunkt taumelnd beweglich an einer Betätigungsstange eines Spannantriebes angeordnet.

Sofern sichergestellt wird, daß zuerst die zentrisch spannenden Spannsegmente und kurz danach die ausgleichend spannenden Spannsegmente der Spannhülse betätigt werden, können der Spannkolben und der Ausgleichspannkolben des erfindungsgemäßen Spannfutters jeweils durch einen eigenen Spannantrieb betätigt werden.

Bei einer bevorzugten Ausführungsform der Erfindung ist es jedoch möglich, für beide Spannkolben, nämlich den zentrisch spannenden Spannkolben und den ausgleichend spannenden Ausgleichspannkolben einen gemeinsamen Spannantrieb mit einer Spannstange vorzusehen, die über eine Antriebshülse mit dem Spannkolben und über eine in der Antriebshülse relativ zu dieser beweglich geführte Antriebsstange mit dem Ausgleichspannkolben verbunden ist, wobei Antriebshülse und Antriebsstange über mindestens ein Gelenkstück begrenzt beweglich miteinander verbunden sind und die Antriebsstange durch eine entgegen der Spannrichtung der Spannstange wirksame Feder belastet ist. Durch diese erfindungsgemäße Ausbildung wird erreicht, daß durch einen gemeinsamen Spannantrieb zuerst der zentrisch spannende Spannkolben bewegt und hierbei die Feder belastet wird, bevor nach erfolgter zentrischer Einspannung des Werkstückes der Ausgleichspannkolben nach Überwinden der Federkraft betätigt wird.

Um den konstruktiven Aufwand und damit den Preis des erfindungsgemäßen Kraftspannfutters zu reduzieren, können zwischen den zentrisch und den ausgleichend spannenden Spannelementen der Spannhülse unbetätigte Segmente ausgebildet werden. In diesem Fall ist es erfindungsgemäß vorteilhaft, zumindest einige der unbetätigten Segmente als Axialanschlag für das Werkstück auszubilden.

Bei einer bevorzugten Ausführungsform der Erfindung wird ein derartiger Axialanschlag als Bolzen ausgebildet, der in einer teilzylindrischen Ausnehmung sowohl des Futterkörpers als auch des jeweiligen Segmentes angeordnet ist. Um derartige Axialanschläge auf einfache Weise auswechselbar im Spannfutter zu halten, wird mit der Erfindung schließlich vorgeschlagen, jeden Bolzen in den Ausnehmungen des Futterkörpers und des Segmentes durch einen zylindrischen, zwischen Futterkörper und Rückseite der Spannhülse angeordneten Endabschnitt einzuklemmen.

Auf der Zeichnung ist ein Ausführungsbeispiel des erfindungsgemäßen Spannfutters dargestellt, und zwar zeigen:
- Fig. 1: eine Frontansicht des Spannfutters,
- Fig. 2: einen Längsschnitt durch das Spannfutter gemäß der Schnittlinie II-II in Fig. 1 und
- Fig. 3: einen weiteren Längsschnitt durch das Spannfutter gemäß der Schnittlinie lll-lll in Fig. 1.

Das Spannfutter besitzt einen zylindrischen Futterkörper 1, der an seiner Rückseite durch einen Deckel 2 verschlossen ist. Futterkörper 1 und Deckel 2 sind durch Schrauben 3 miteinander verbunden. Die Befestigung des Spannfutters an einer nicht dargestellten Spindel einer Werkzeugmaschine erfolgt durch Futterbefestigungsschrauben 4, die im Deckel 2 angeordnet sind.

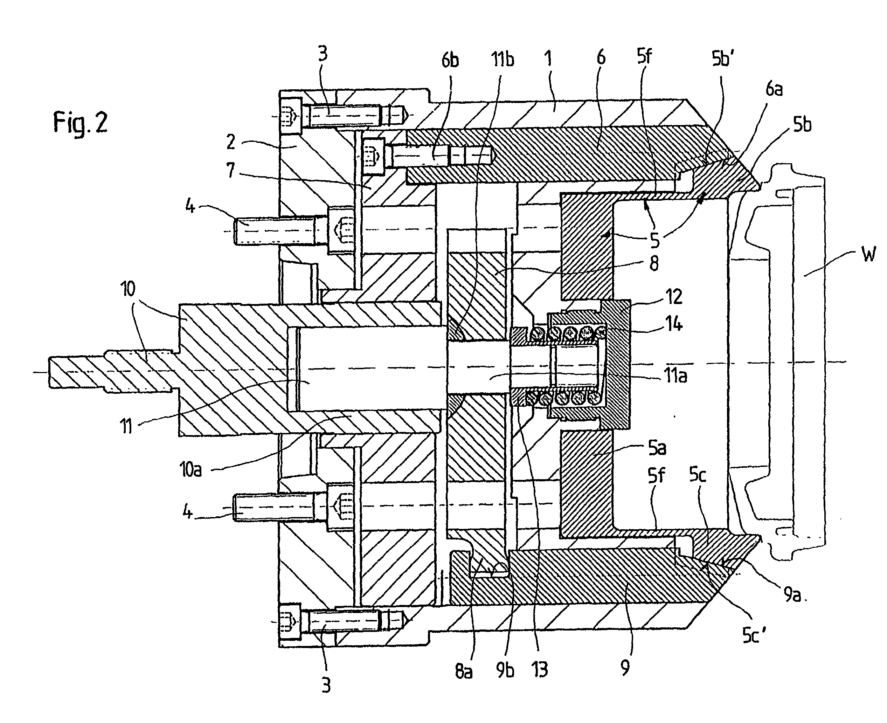

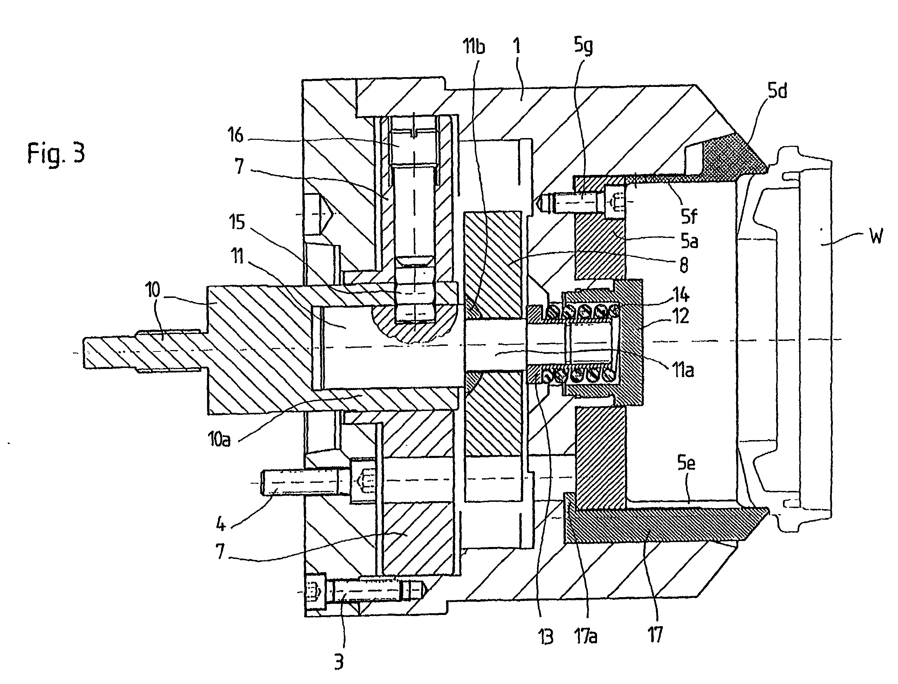

Wie am besten aus Fig. 2 hervorgeht, ist im vorderen Teil des Futterkörpers 1 eine Spannhülse 5 angeordnet, die einen kreiszylindrischen Boden 5a und beim Ausführungsbeispiel insgesamt 12 Spannsegmente 5b, 5c und 5d umfaßt, die durch über den vorderen Teil der Spannhülse 5 verlaufende radiale Schlitze 5e voneinander getrennt und jeweils über einen axialen Steg 5f mit dem Boden 5a verbunden sind. Wie Fig. 3 zeigt, ist die Spannhülse 5 über ihren Boden 5a durch Schrauben 5g am Futterkörper 1 befestigt.

Beim dargestellten Ausführungsbeispiel werden drei der insgesamt zwölf Spannsegmente zentrisch spannend betätigt. Es handelt sich hierbei um die Spannsegmente 5b. Deren Betätigung erfolgt jeweils durch einen Spannbolzen 6, der an seinem vorderen Ende mit einer Spannschräge 6a versehen ist, die mit einer entsprechenden Spannschräge 5b' des Spannsegments 5b zusammenwirkt. Am hinteren Ende ist jeder Spannbolzen 6 durch eine Schraube 6b mit einem Spannkolben 7 starr verbunden, der ausschließlich axial beweglich in einer zylindrischen Bohrung des Futterkörpers 1 geführt ist. Eine axiale Vorwärtsbewegung des Spannkolbens 7 und der mit diesem starr verbundenen Spannbolzen 6 hat demgemäß über die Spannschrägen 6a und 5b' eine radial nach innen gerichtete Spannbewegung der Spannsegmente 5b der Spannhülse 5 zur Folge, die beim Ausführungsbeispiel als radial von außen nach innen spannende Spannzange ausgeführt ist.

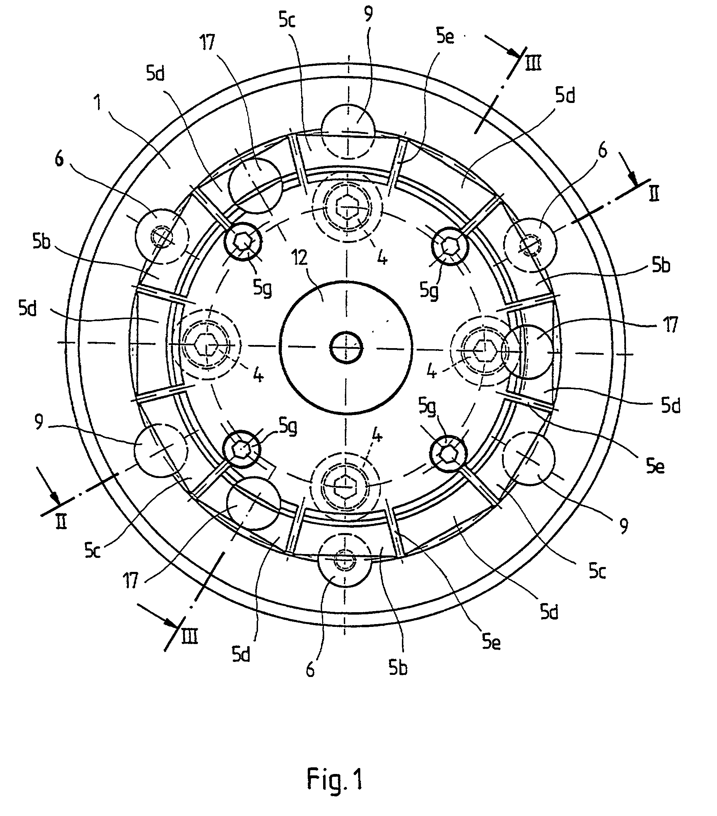

Wie aus Fig. 1 hervorgeht, ist mittig zwischen den zentrisch spannenden Spannsegmenten 5b der Spannhülse 5 jeweils ein Spannsegment 5c angeordnet, das ausgleichend spannend betätigt wird.

Diese ausgleichende Spannbewegung der drei Spannsegmente 5c erfolgt durch einen Ausgleichspannkolben 8, der über jeweils einen Spannbolzen 9 auf eines der Spannsegmente 5c einwirkt. Auch die Spannbolzen 9 sind an ihrem vorderen Ende mit einer Spannschräge 9a ausgebildet, die mit einer entsprechenden Spannschräge 5c' der Spannsegmente 5c zusammenwirkt. Im Gegensatz zu den Spannbolzen 6 sind die Spannbolzen 9 jedoch nicht starr, sondern gelenkig mit dem Ausgleichspannkolben 8 verbunden, wozu jeder Spannbolzen 9 an seinem rückwärtigen Ende mit einer Nut 9b versehen ist, in die ein Vorsprung 8a des Ausgleichspannkolbens 8 eingreift, so daß sich durch gewölbte Anlageflächen eine geringfügig gelenkige Verbindung zwischen dem Ausgleichspannkolben 8 und dem Spannbolzen 9 ergibt.

Anstelle getrennter Antriebe für den Spannkolben 7 einerseits und den Ausgleichspannkolben 8 andererseits ist beim dargestellten Ausführungsbeispiel für beide Kolben 7 und 8 ein gemeinsamer Antrieb vorgesehen. Von diesem gemeinsamen Spannantrieb ist in den Fig. 2 und 3 lediglich eine Spannstange 10 gezeichnet, deren vorderes Ende als Antriebshülse 10a ausgeführt ist. In dieser Antriebshülse 10a ist ein Ausgleichkolben 11 in axialer Richtung geringfügig beweglich gelagert, auf dessen Kolbenstange 11a ein Lagerstück 11b angeordnet ist. Dieses Lagerstück 11b hat an seiner Vorderseite eine kugelringförmige Lagerfläche, über die sich der Ausgleichspannkolben 8 mit einer entsprechend kugelringförmigen Lagerfläche am Lagerstück 11b und damit am Ausgleichkolben 11 abstützt. Hierdurch wird die Möglichkeit geschaffen, daß sich der Ausgleichspannkolben 8 geringfügig taumelnd auf dem Ausgleichkolben 11 bewegt. Zu diesem Zweck muß die zentrale Bohrung im Ausgleichspannkolben 8 ausreichend größer sein als der Außendurchmesser der Kolbenstange 11a des Ausgleichkolbens 11.

Um bei einer Betätigung der Spannstange 10 des nicht dargestellten Spannantriebes ein Voreilen des Spannkolbens 7 gegenüber dem Ausgleichspannkolben 8 zu ermöglichen, ist zwischen einem vorderen, in den Futterkörper 1 eingeschraubten Federteller 12 und einem hinteren, sich an einem Ringbund der Kolbenstange 11a abstützenden Federteller 13 eine Druckfeder 14 angeordnet, die beim Ausführungsbeispiel als Wendelfeder dargestellt ist.

Weiterhin ist gemäß Fig. 3 die Antriebshülse 10a der Spannstange 10 über ein Pendelstück 15 einerseits mit dem Spannkolben 7 und andererseits mit dem Ausgleichkolben 11 derart verbunden, daß in axialer Richtung eine geringfügige Relativbewegung zwischen diesen Teilen möglich ist. Das Pendelstück 15 wird durch eine Halteschraube 16 in einer radialen Bohrung gehalten, die durchgehend sowohl im Spannkolben 7 als auch in der Antriebshülse 10a und im Ausgleichkolben 11 ausgebildet ist.

In den Fig. 2 und 3 ist ein Werkstück W eingezeichnet, das durch die Spannsegmente 5b und 5c der Spannhülse 5 eingespannt wird. Bei diesem Werkstück W handelt es sich beispielsweise um ein dünnwandiges Spritzgußteil.

Um für das Einspannen dieses Werkstückes W Festanschläge im Spannfutter zu schaffen, sind beim Ausführungsbeispiel insgesamt drei Axialanschläge vorgesehen. Diese Axialanschläge bestehen gemäß der Darstellung in der unteren Hälfte der Fig. 3 aus einem Anschlagbolzen 17, der über den größten Teil seiner axialen Länge teilzylindrisch ausgebildet ist und lediglich an seinem innenliegenden Ende mit einem vollzylindrischen Endabschnitt 17a ausgeführt ist. Mit diesem Endabschnitt 17a wird jeder Anschlagbolzen 17 zwischen Futterkörper 1 und Boden 5a der Spannhülse 5 leicht auswechselbar eingespannt. Die Führung jedes Anschlagbolzens 17 erfolgt durch entsprechende teilzylindrische Ausnehmungen sowohl im Futterkörper 1 als auch im jeweiligen Spannsegment 5d.

Zum Einspannen des Werkstückes W werden als erstes durch eine Spannbewegung der Spannstange 10 die zentrisch spannenden Spannsegmente 5b über die Spannbolzen 6 durch den Spannkolben 7 radial nach innen bewegt. Hierdurch erfolgt ein Einmitten und zentrisches Spannen des Werkstückes W mit geringer Spannkraft. Die Relativbewegung des Spannkolbens 7 gegenüber dem Ausgleichspannkolben 8 wird hierbei durch Zusammendrücken der Druckfeder 14 ermöglicht. Bei einer weiteren Spannbewegung der Spannstange 10 erfolgt nunmehr eine Mitnahme des Ausgleichspannkolbens 8 über den Ausgleichkolben 11, wobei der Ausgleichspannkolben 8 aufgrund der kugelringförmigen Lagerflächen zum Lagerstück 11b eine geringfügig taumelnde Bewegung ausführen kann, so daß sich die von jeweils einem Spannbolzen 9 angetriebenen Spannsegmente 5c ausgleichend spannend an die Oberfläche des Werkstückes W anlegen können. Erst wenn auch die Spannsegmente 5c mit der vorgesehenen Spannkraft am Werkstück W anliegen, ist die für die Bearbeitung des Werkstückes W erforderliche Spannkraft aufgebracht, die aufgrund ihrer Aufteilung auf sechs Spannsegmente 5b und 5c eine unerwünschte Verformung des dünnwandigen Werkstückes W vermeidet. Durch eine Anlage des Werkstückes W an den als Axialanschlägen dienenden Anschlagbolzen 17 wurde vor Beginn des Spannvorganges sichergestellt, daß das Werkstück W ordnungsgemäß von den Spannsegmenten 5b und 5c erfaßt wird.

Da die Ausbildung der Spannhülse 5 und der Anschlagbolzen 17 an das jeweils einzuspannende Werkstück W angepaßt werden muß, ist es durch Lösen der Schrauben 5g auf einfache Weise möglich, die werkstückspezifischen Teile des Spannfutters schnell und problemlos auszuwechseln.

### Bezugszeichenliste

- W: Werkstück

- 1: Futterkörper
- 2: Deckel
- 3: Schraube
- 4: Futterbefestigungsschraube
- 5: Spannhülse
- 5a: Boden
- 5b: Spannsegment
- 5b': Spannschräge
- 5c: Spannsegment
- 5c': Spannschräge
- 5d: Spannsegment
- 5e: Schlitz
- 5f: Steg
- 5g: Schraube
- 6: Spannbolzen
- 6a: Spannschräge
- 6b: Schraube
- 7: Spannkolben
- 8: Ausgleichspannkolben
- 8a: Vorsprung
- 9: Spannbolzen
- 9a: Spannschräge
- 9b: Nut
- 10: Spannstange
- 10a: Antriebshülse
- 11: Ausgleichkolben
- 11a: Kolbenstange
- 11b: Lagerstück
- 12: Federteller
- 13: Federteller
- 14: Druckfeder
- 15: Pendelstück
- 16: Halteschraube
- 17: Anschlagbolzen
- 17a: Endabschnitt

## Patentansprüche

1. Kraftbetätigtes Spannfutter für Werkzeugmaschinen mit einem vorzugsweise an einer drehend antreibbaren Spindel zu befestigenden Futterkörper (1) und einer Spannhülse (5), die durch zumindest über ihren vorderen Teil verlaufende radiale Schlitze (5e) in eine Mehrzahl von Spannsegmente (5b, 5c) unterteilt ist, die jeweils mit einer Spannschräge (5b', 5c') versehen und durch ein mit entsprechenden Gegenflächen versehenes, axial bewegliches Spannelement in radialer Richtung verformbar sind,
**dadurch gekennzeichnet**,
daß mindestens zwei, vorzugsweise drei gleichmäßig über den Umfang verteilte Spannsegmente (5b) zentrisch spannend durch einen ausschließlich axial beweglich im Futterkörper (1) geführten Spannkolben (7) und die restlichen Spannsegmente (5c) ausgleichend spannend durch einen taumelnd beweglich im Futterkörper (1) geführten Ausgleichspannkolben (8) betätigbar sind.

2. Spannfutter nach Anspruch 1, dadurch gekennzeichnet, daß die zentrisch spannenden Spannsegmente (5b) jeweils durch einen in einer Bohrung des Futterkörpers (1) axial geführten Spannbolzen (6) betätigbar sind, der an seinem rückwärtigen Ende starr mit dem Spannkolben (7) verbunden und an seinem vorderen Ende mit der jeweiligen Gegenfläche (6a) für die Spannschräge (5b') des Spannsegmentes (5b) versehen ist.

3. Spannfutter nach Anspruch 1 oder 2, dadurch gekennzeichnet, daß die ausgleichend spannenden Spannsegemente (5c) jeweils durch einen in einer Bohrung des Futterkörpers (1) axial geführten Spannbolzen (9) betätigbar sind, der an seinem rückwärtigen Ende gelenkig mit dem taumelnd beweglich im Futterkörper (1) geführten Ausgleichspannkolben (8) verbunden und an seinem vorderen Ende mit der jeweiligen Gegenfläche (9a) für die Spannschräge (5c') des Spannsegmentes (5c) versehen ist.

4. Spannfutter nach Anspruch 3, dadurch gekennzeichnet, daß der Ausgleichspannkolben (8) über eine sphärische Lagerfläche um einen auf der Futterlängsachse liegenden Mittelpunkt taumelnd beweglich an einer Befestigungsstange eines Spannantriebes angeordnet ist.

5. Spannfutter nach mindestens einem der Ansprüche 1 bis 4, dadurch gekennzeichnet, daß der Spannkolben (7) und der Ausgleichspannkolben (8) von jeweils einem eigenen Spannantrieb betätigbar sind.

6. Spannfutter nach mindestens einem der Ansprüche 1 bis 4, dadurch gekennzeichnet, daß für beide Spannkolben (7, 8) ein gemeinsamer Spannantrieb mit einer Spannstange (10) vorgesehen ist, die über eine Antriebshülse (10a) mit dem Spannkolben (7) und über eine in der Antriebshülse (10a) relativ zu dieser beweglich geführten Ausgleichkolben (11) mit dem Ausgleichspannkolben (8) verbunden ist, wobei Antriebshülse (10a) und Ausgleichkolben (11) über mindestens ein Pendelstück (15) begrenzt beweglich miteinander verbunden sind und der Ausgleichkolben (11) durch eine entgegen der Spannrichtung der Spannstange (10) wirksame Feder (14) belastet ist.

7. Spannfutter nach mindestens einem der Ansprüche 1 bis 6, dadurch gekennzeichnet, daß zwischen den zentrisch und den ausgleichend spannenden Spannsegmenten (5b, 5c) unbetätigte Segmente (5d) ausgebildet sind.

8. Spannfutter nach Anspruch 7, dadurch gekennzeichnet, daß zumindest einige der unbetätigten Segmente (5d) als Axialanschlag für das Werkstück (W) ausgebildet sind.

9. Spannfutter nach Anspruch 8, dadurch gekennzeichnet, daß der Axialanschlag als Anschlagbolzen (17) ausgebildet ist, der in einer teilzylindrischen Ausnehmung sowohl des Futterkörpers (1) als auch des jeweiligen Segmentes (5d) angeordnet ist.

10. Spannfutter nach Anspruch 9, dadurch gekennzeichnet, daß der Anschlagbolzen (17) in den Ausnehmungen des Futterkörpers (1) und des Segmentes (5d) durch einen zylindrischen zwischen Futterkörper (1) und Rückseite der Spannhülse (5) angeordneten Endabschnitt (17a) auswechselbar gehalten ist.

## Claims

1. Power chuck for machine tools, having a chuck body (1), which is preferably to be fastened to a spindle which can be rotationally driven, and a gripping sleeve (5) which is subdivided into a plurality of gripping segments (5b, 5c) by radial slots (5e) running at least over its front part, which gripping segments (5b, 5c) are each provided with a gripping bevel (5b', 5c') and can be deformed in the radial direction by an axially movable gripping element provided with corresponding mating surfaces, characterized in that at least two, preferably three, gripping segments (5b), distributed uniformly over the periphery, can be actuated so as to grip in a concentric manner by a chuck plunger (7) guided solely in an axially movable manner in the chuck body (1), and the remaining gripping segments (5c) can be actuated so as to grip in a compensating manner by a compensating chuck plunger (8) guided so as to be movable in a wobbling manner in the chuck body (1).

2. Chuck according to Claim 1, characterized in that gripping segments (5b) which grip in a concentric manner can each be actuated by a gripping pin (6) which is guided axially in a bore of the chuck body (1), is rigidly connected at its rear end to the chuck plunger (7) and is provided at its front end with the respective mating surface (6a) for the gripping bevel (5b') of the gripping segment (5b).

3. Chuck according to Claim 1 or 2, characterized in that the gripping segments (5c) which grip in a compensating manner can each be actuated by a gripping pin (9) which is axially guided in a bore of the chuck body (1), is connected at its rear end in an articulated manner to the compensating chuck plunger (8) guided so as to be movable in a wobbling manner in the chuck body (1), and is provided at its front end with the respective mating surface (9a) for the gripping bevel (5c') of the gripping segment (5c).

4. Chuck according to Claim 3, characterized in that the compensating chuck plunger (8) is arranged on a fastening rod of a chuck drive so as to be movable in a wobbling manner via a spherical bearing surface about a centre point lying on the chuck longitudinal axis.

5. Chuck according to at least one of Claims 1 to 4, characterized in that the chuck plunger (7) and the compensating chuck plunger (8) can each be actuated by a separate chuck drive.

6. Chuck according to at least one of Claims 1 to 4, characterized in that a common chuck drive having a chuck rod (10) is provided for both chuck plungers (7, 8), which chuck rod (10) is connected to the chuck plunger (7) via a drive sleeve (10a) and to the compensating chuck plunger (8) via a compensating plunger (11) guided in the drive sleeve (10a) so as to be movable relative to the latter, the drive sleeve (10a) and compensating plunger (11) being connected to one another via at least one floating piece (15) so as to be movable to a limited extent, and the compensating plunger (11) being loaded by a spring (14) which is effective against the chucking direction of the chuck rod (10).

7. Chuck according to at least one of Claims 1 to 6, characterized in that non-actuated segments (5d) are formed between the gripping segments (5b) which grip in a concentric manner and the gripping segments (5c) which grip in a compensating manner.

8. Chuck according to Claim 7, characterized in that at least some of the non-actuated segements (5d) are designed as an axial stop for the workpiece (W).

9. Chuck according to Claim 8, characterized in that the axial stop is designed as a stop pin (17), which is arranged in a partly cylindrical recess of both the chuck body (1) and the respective segment (5d).

10. Chuck according to Claim 9, characterized in that the stop pin (17) is interchangeably held in the recesses of the chuck body (1) and of the segment (5d) by a cylindrical end section (17a) arranged between the chuck body (1) and the rear side of the gripping sleeve (5) .

## Revendications

1. Mandrin de serrage actionné par une force, pour machines-outils, comprenant un corps de mandrin (1) à fixer de préférence sur une broche entraînée en rotation, et une douille de serrage (5), laquelle est subdivisée par des fentes radiales (5e) qui s'étendent au moins sur sa partie antérieure en une pluralité de segments de serrage (5b, 5c), lesquels sont dotés chacun d'un biseau de serrage (5b', 5c'), et sont déformables en direction radiale par un élément de serrage axialement mobile et pourvu de surfaces complémentaires correspondantes,
caractérisé en ce qu'au moins deux segments de serrage (5b) et de préférence au moins trois segments de serrage, régulièrement répartis sur la périphérie, sont susceptibles d'être actionnés en assurant un serrage centré par un piston de serrage (7) guidé en déplacement exclusivement axial dans le corps de mandrin (1), et les segments de serrage restants (5b) sont susceptibles d'être actionnés en assurant un serrage égalisé par un piston de serrage d'égalisation (8) guidé en déplacement oscillant dans le corps de mandrin (1).

2. Mandrin de serrage selon la revendication 1, caractérisé en ce que les segments de serrage (5b) qui assurent un serrage centré sont susceptibles d'être actionnés chacun par un goujon de serrage (6) guidé axialement dans un perçage du corps de mandrin (1), ledit goujon de serrage étant relié à son extrémité postérieure rigidement avec le piston de serrage (7), et étant doté à son extrémité antérieure de la surface complémentaire respective (6a) pour le biseau de serrage (5b') du segment de serrage (5b).

3. Mandrin de serrage selon l'une ou l'autre des revendications 1 et 2, caractérisé en ce que les segments de serrage (5c) assurant un serrage d'égalisation sont susceptibles d'être actionnés chacun par un goujon de serrage (9) guidé axialement dans un perçage du corps de mandrin (1), ledit goujon étant relié à son extrémité postérieure de façon articulée avec le piston de serrage d'égalisation (8) guidé en déplacement oscillant dans le corps de mandrin (1), et étant pourvu à son extrémité antérieure de la surface complémentaire respective (9a) pour le biseau de serrage (5c') du segment de serrage (5c).

4. Mandrin de serrage selon la revendication 3, caractérisé en ce que le piston de serrage d'égalisation (8) est agencé, par l'intermédiaire d'une surface de montage sphérique, en déplacement oscillant autour d'un point central situé sur l'axe longitudinal du mandrin, sur une tige de fixation d'un mécanisme de serrage.

5. Mandrin de serrage selon l'une au moins des revendications 1 à 4, caractérisé en ce que le piston de serrage (7) et le piston de serrage d'égalisation (8) sont susceptibles d'être actionnés chacun par un mécanisme de serrage propre.

6. Mandrin de serrage selon l'une au moins des revendications 1 à 4, caractérisé en ce qu'il est prévu pour les deux pistons de serrage (7, 8) un mécanisme de serrage commun avec une tige de serrage (10) qui est reliée au moyen d'une douille d'entraînement (10a) avec le piston de serrage (7) et qui est reliée avec le piston de serrage d'égalisation (8) au moyen d'un piston d'égalisation (11) mobile dans la douille d'entraînement (10a) par rapport au piston de serrage (7), en ce que la douille d'entraînement (10a) et le piston d'égalisation (11) sont reliés l'un à l'autre avec faculté de déplacement limité, par l'intermédiaire d'une pièce pendulaire (15), et en ce que le piston d'égalisation (11) est chargé par un ressort (14) agissant à l'encontre de la direction de serrage de la tige de serrage (10).

7. Mandrin de serrage selon l'une au moins des revendications 1 à 6, caractérisé en ce qu'entre les segments de serrage (5b, 5c) assurant un serrage centré et assurant un serrage d'égalisation, sont réalisés des segments non actionnés (5d).

8. Mandrin de serrage selon la revendication 7, caractérisé en ce que certains au moins des segments non actionnés (5d) sont réalisés sous forme de butée axiale pour la pièce à oeuvrer (W).

9. Mandrin de serrage selon la revendication 8, caractérisé en ce que la butée axiale est réalisée sous forme de goujon de butée (17) qui est agencé dans un évidement cylindrique partiel à la fois dans le corps de mandrin (1) et dans le segment respectif (5d).

10. Mandrin de serrage selon la revendication 9, caractérisé en ce que le goujon de butée (17) est maintenu de manière interchangeable dans les évidements du corps de mandrin (1) et du segment (5d) par un tronçon final (17a) cylindrique agencé entre le corps de mandrin (1) et la face postérieure de la douille de serrage (5).
